# EUROPÄISCHE PATENTSCHRIFT

(11) **EP 2 230 486 B1**
(45) Veröffentlichungstag und Bekanntmachung des Hinweises auf die Patenterteilung: **18.06.2014**
(21) Anmeldenummer: 10156463.1
(22) Anmeldetag: 15.03.2010
(51) Int. Cl.: G01D 5/165, H01H 36/00

(54) **Positionssensor**
Position sensor
Capteur de position

(30) Priorität: 19.03.2009 DE 102009013533
(43) Veröffentlichungstag der Anmeldung: 22.09.2010
(73) Patentinhaber: Metallux AG, 71404 Korb (DE)
(72) Erfinder: Herlinger, Peter, 73733, Esslingen (DE); Nurce, Ismet, 70806, Kornwestheim (DE)
(74) Vertreter: Bernhard, Uwe

(56) Entgegenhaltungen:
- EP-A1- 1 491 771
- DE-A1-102007 023 530
- US-A- 4 616 213

## Beschreibung

Die vorliegende Erfindung betrifft einen Positionssensor, insbesondere einen Weggeber oder Winkelgeber, mit den Merkmalen des Oberbegriffs des Anspruchs 1.

Aus der EP 1 491 771 A1 ist ein mittels magnetischer Betätigungskräfte betätigbarer Positionssensor bekannt, der einen Basisträger sowie einen flexiblen Kontaktträger aufweist. Der Basisträger trägt zumindest eine Komponente einer Positionserfassungsschaltung, nämlich insbesondere eine Widerstandsbahn, während der Kontaktträger beabstandet zum Basisträger angeordnet ist. Durch lokal angreifende Betätigungskräfte kann der Kontaktträger lokal soweit elastisch verformt werden, dass er eine lokale elektrische Kontaktierung von zwei Komponenten der Positionserfassungsschaltung ermöglicht. Beim bekannten Positionssensor trägt der Kontaktträger eine Kontaktelektrode und bildet dadurch einen Kollektor der als Potentiometerschaltung ausgestalteten Positionserfassungsschaltung. Zur Realisierung der elektromagnetischen Betätigung ist beim bekannten Positionssensor an einer vom Basisträger abgewandten Seite des Kontaktträgers eine ferrohaltige Kunststofffolie angeordnet, die eine mittels magnetischer Kräfte anziehbare Betätigungseinrichtung bildet.

Derartige Sensoren, die auch als Foliensensor bezeichnet werden können, zeichnen sich durch eine preiswerte Bauweise sowie durch eine relativ hohe Genauigkeit aus. Problematisch ist bei derartigen Sensoren die Höhe der zur Betätigung erforderlichen Kräfte. Um den Positionssensor mittels magnetischer Kräfte berührungslos betätigen zu können, sind vergleichsweise große magnetische Anziehungskräfte erforderlich. Falls der Positionssensor durch mechanischen Kontakt betätigt werden soll, führen die mit einer Berührung einhergehenden Betätigungen zwangläufig zu einem Verschleiß.

Die vorliegende Erfindung beschäftigt sich mit dem Problem, für einen Positionssensor der eingangs genannten Art eine verbesserte Ausführungsform anzugeben, die sich insbesondere dadurch auszeichnet, dass sie mit vergleichsweise geringen Betätigungskräften auskommt.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Flexibilität bzw. Elastizität des Kontaktträgers dadurch zu erhöhen, dass der Kontaktträger mit wenigstens einer Perforation versehen wird. Mit Hilfe einer solchen Perforation kann die Stabilität bzw. die Steifigkeit des Kontaktträgers signifikant reduziert werden, wodurch es leichter, also mit geringeren Kräften möglich ist, den Kontaktträger lokal zu verformen. In der Folge führt dies dazu, dass der perforierte Kontaktträger mit deutlich reduzierten Betätigungskräften für die gewünschte Kontaktierung ausreichend lokal elastisch verformt werden kann. Im Falle einer mit körperlichen Kontakt einhergehenden Betätigung lassen sich durch Reduzieren der erforderlichen Betätigungskräfte Reibungseffekte und insbesondere Verschleiß erheblich reduzieren. Bei einer kontaktlosen Ausführungsform können die erforderlichen magnetischen Betätigungskräfte deutlich reduziert werden.

Entsprechend einer vorteilhaften Ausführungsform kann der Kontaktträger einen Kontaktbereich aufweisen, der zur elektrischen Kontaktierung der beiden Komponenten der Positionserfassungsschaltung lokal elastisch verformbar ist.

Ferner weist der Kontaktträger beiderseits dieses Kontaktbereichs je einen Haltebereich auf, die jeweils perforiert sind. Darüber hinaus ist ein den Kontaktbereich und die Haltebereiche einfassender Randbereich vorgesehen. Durch die perforierten Haltebereiche und den vorzugsweise nicht perforierten Randbereich sowie den vorzugsweise nicht perforierten Kontaktbereich wird innerhalb des Kontaktträgers eine Verformungskinematik vorgegeben, die es ermöglicht, den Kontaktbereich besonders leicht gegenüber dem Randbereich elastisch auszulenken. Die Erfindung nutzt hierbei die Erkenntnis, dass es zur elektrischen Kontaktierung der beiden Komponenten der Positionserfassungsschaltung ausreicht, nur einen vergleichsweise kleinen Bereich des Kontaktträgers, nämlich den Kontaktbereich, räumlich zu verlagern, um lokal den Abstand des Kontaktträgers gegenüber dem Basisträger zu reduzieren.

Die jeweilige Perforation ist vorzugsweise durch eine Vielzahl von zueinander parallelen Schlitzen gebildet. Mit Hilfe derartiger Schlitze wird die Elastizität bzw. Beweglichkeit des Kontaktträgers quer zu den Schlitzen vergrößert.

Zweckmäßig erstrecken sich die Schlitze entlang einer Positionserfassungsstrecke, die geradlinig oder gekrümmt und insbesondere auf einer Kreisbahn verlaufen kann.

Besonders vorteilhaft ist eine Ausführungsform, bei welcher an einer von der Positionserfassungsschaltung abgewandten Seite des Kontaktträgers eine mittels magnetischer Kräfte anziehbare Betätigungseinrichtung angeordnet ist. Mit Hilfe dieser Betätigungseinrichtung können am Kontaktträger lokal angreifende Betätigungskräfte berührungslos in den Positionssensor eingeleitet werden. Mit anderen Worten, der Positionssensor kann dann als magnetischer Positionssensor bzw. als berührungslos betätigbarer Positionssensor verwendet werden.

Entsprechend einer besonders zweckmäßigen Weiterbildung kann sich die Betätigungseinrichtung über einen Steg am Kontaktträger abstützen, wobei sich dieser Steg entlang eines zur elektrischen Kontaktierung der zwei Komponenten der Positionserfassungsschaltung lokal verformbaren Kontaktbereichs des Kontaktträgers erstreckt. Die an der Betätigungseinrichtung angreifenden magnetischen Kräfte werden über den Steg auf den Kontaktbereich des Kompaktträgers konzentriert. Der Steg, der einschichtig oder mehrschichtig realisiert sein kann, besitzt quer zur Positionserfassungsstrecke eine kleinere Abmessung als die Betätigungseinrichtung. Insbesondere ist die Querabmessung des Stegs auf die Querabmessung des Kontaktbereichs des Kontaktträgers abgestimmt. Da mit Hilfe des Stegs die Betätigungseinrichtung deutlich breiter dimensioniert werden kann, kann auch relativ viel magnetisch anziehbares Material bereitgestellt werden, um die berührungslose Magnetkraftbetätigung zu vereinfachen. Die Kraftkonzentration über den Steg erlaubt es außerdem, den Sensor mit vergleichsweise kleinen Betätigungskräften zu betätigen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen stark vereinfachten, prinzipiellen Längsschnitt durch einen Positionssensor,
- Fig. 2: einen Querschnitt des Positionssensors in einem betätigten Bereich entsprechend den Schnittlinien II in Fig. 1,
- Fig. 3: einen Querschnitt des Positionssensors in einem unbetätigten Bereich entsprechend den Schnittlinien III in Fig. 1,
- Fig. 4: eine auseinander gezogene Darstellung des Positionssensors im Querschnitt der Fig. 2,
- Fig. 5: eine auseinander gezogene perspektivische Darstellung des Positionssensors.

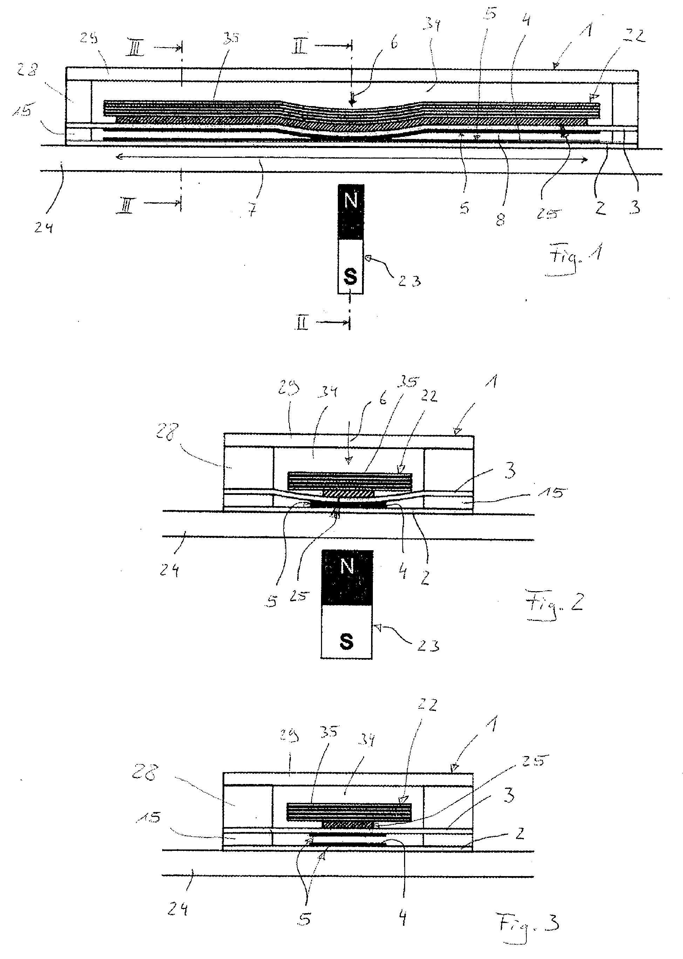

Entsprechend den Fig. 1 bis 5 umfasst ein Positionssensor 1, der als Weggeber oder Winkelgeber ausgestaltet sein kann, einen Basisträger 2 sowie einen Kontaktträger 3. Der Basisträger 2 trägt zumindest eine Komponente 4 einer Positionserfassungsschaltung 5, die insbesondere als Potentiometerschaltung ausgestaltet sein kann. Der Kontaktträger 3 ist flexibel ausgestaltet und ist elektrisch isolierend beabstandet zur wenigstens einen Komponente 4 der Positionserfassungsschaltung 5 des Basisträgers 2 angeordnet. Ferner ist der Kontaktträger 3 so ausgestaltet, dass er durch lokal daran angreifende Betätigungskräfte 6, die in den Fig. 1 und 2 durch einen Pfeil angedeutet sind, lokal bzw. lokal begrenzt soweit elastisch verformbar ist, dass er eine lokale elektrische Kontaktierung von zwei Komponenten der Positionserfassungsschaltung 5 ermöglicht. Diese lokale Verformung ist in den Fig. 1 und 2 besonders deutlich erkennbar und ist auf einen Abschnitt der Längserstreckung der Positionserfassungsschaltung 5 bzw. auf einen kleinen Abschnitt einer durch einen Doppelpfeil angedeuteten Positionserfassungsstrecke 7 der Positionserfassungsschaltung 5 begrenzt. Im Schnitt der Fig. 2 ist der Positionssensor 1 betätigt, während er im Schnitt der Fig. 3 unbetätigt ist. Erkennbar ist der Kontaktträger 3 zur Betätigung elastisch verformbar. Durch Auswerten der Positionserfassungsschaltung 5 kann die absolute Lage oder Position dieser elektrischen Kontaktierung ermittelt werden.

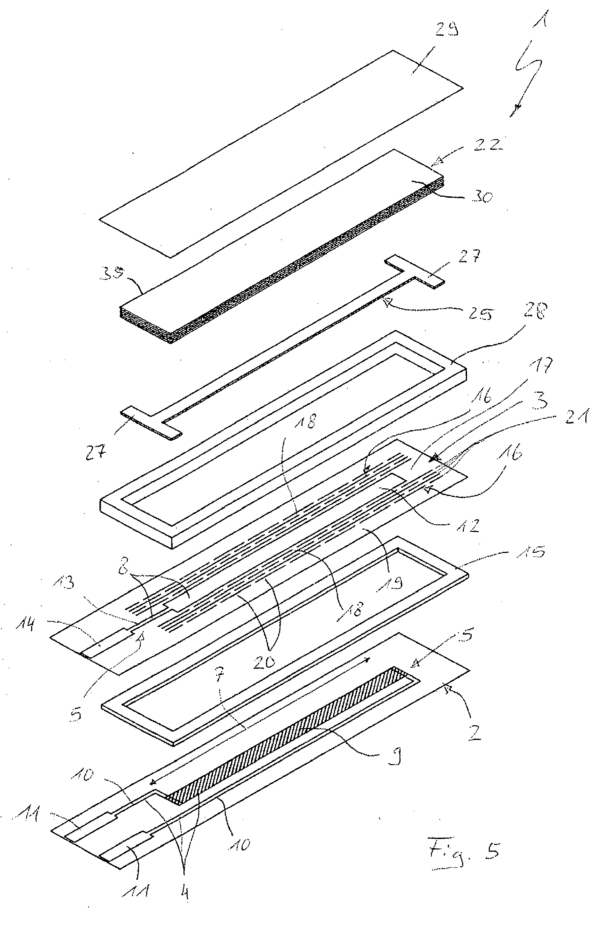

Im gezeigten Beispiel umfasst die Positionserfassungsschaltung 5 auch am Kontaktträger 3 zumindest eine Komponente 8. Im Falle einer als Potentiometerschaltung ausgestalteten Positionserfassungsschaltung 5 kann es sich bei den Komponenten 4 des Basisträgers 2 entsprechend Fig. 5 um eine Widerstandsbahn 9 sowie um Leiterbahnen 10 handeln, welche die Enden der Widerstandsbahn 9 mit Kontaktelektroden 11 oder Anschlüssen 11 verbinden. Die am Kontaktträger 3 angeordneten Komponenten 8 sind im Beispiel der Fig. 5 eine Kollektorbahn 12 und eine Leiterbahn 13, welche die Kollektorbahn 12 mit einer Kontaktelektrode 14 verbindet. Bei einer anderen Ausführungsform können die Kollektorbahn 12, die zugehörige Leiterbahn 13 und die zugehörige Elektrode 14 ebenfalls am Basisträger 2 angeordnet sein, wobei dann die Kollektorbahn 12 mit elektrisch isolierendem Abstand parallel zur Widerstandbahn 9 verläuft. Der Kontaktträger 3 trägt dann eine Konnektorbahn aus einem elektrisch leitenden Material, die so dimensioniert ist, dass sie den elektrisch isolierenden Abstand zwischen der Widerstandsbahn 9 und der Kollektorbahn 12 des Basisträgers 2 im Falle einer Kontaktierung elektrisch leitend überbrückt und dadurch die beiden Komponenten elektrisch leitend miteinander kontaktiert.

Abweichend von der in Fig. 5 wiedergegebenen Darstellung befinden sich die Komponenten 8 der Positionserfassungsschaltung 5, die am Kompaktträger 3 angeordnet sind, nicht an der dem Betrachter zugewandten Oberseite, sondern an der vom Betrachter abgewandten und dementsprechend dem Basisträger 2 zugewandten Unterseite.

Zur Realisierung des elektrisch isolierenden Abstands zwischen dem Kontaktträger 3 und dem Basisträger 2 bzw. zwischen den Komponenten 4 des Basisträgers 2 einerseits und den Komponenten 8 des Kontaktträgers 3 andererseits kann bei der hier gezeigten Bauweise ein Distanzelement 15 vorgesehen sein, das bspw. nach Art eines Rahmens die miteinander zu kontaktierenden Komponenten 4, 8 der Positionserfassungsschaltung 5 umschließt und das einerseits am Basisträger 2 und andererseits am Kontaktträger 3 abgestützt ist.

Damit sich der Kontaktträger 3 mit vergleichsweise geringen Betätigungskräften 6 lokal soweit deformieren lässt, dass die gewünschte elektrische Kontaktierung in der Positionserfassungsschaltung 5 zustande kommt, ist der Kontaktträger 2 entsprechend Fig. 5 mit wenigstens einer Perforation 16 ausgestattet. Im Beispiel sind zwei derartige Perforationen 16 vorgesehen. Die jeweilige Perforation 16 ist so ausgestaltet, dass sie die Realisierung der lokal elastischen Verformungen des Kontaktträgers 3 erleichtert bzw. bereits mit geringeren Kräften ermöglicht. Mit anderen Worten, die jeweilige Perforation 16 ist so konzipiert, dass sie die Steifigkeit bzw. Stabilität des Kontaktträgers 3 gezielt so reduziert, dass er einfacher, also mit kleineren Betätigungskräften 6 lokal elastisch verformbar ist.

Im hier gezeigten, bevorzugten Beispiel besitzt der Kontaktträger 3 einen zentralen Kontaktbereich 17, zwei beiderseits des Kontaktbereichs 17 angeordnete Haltebereiche 18 sowie einen Randbereich 19. Der Kontaktbereich 17 dient zur elektrischen Kontaktierung der zwei Komponenten 4, 8 der Positionserfassungsschaltung 5 und ist hierzu lokal elastisch verformbar. Der Kontaktbereich 17 trägt insbesondere die Kollektorbahn 12 oder bei der vorstehend beschriebenen alternativen Verschaltung die genannte Konnektorbahn. Die beiden Kontaktbereiche 18 sind mit den Perforationen 16 ausgestattet und verbinden den Kontaktbereich 17 zwischen seinen Längsenden mit dem Randbereich 19. Der Randbereich 19 fasst die beiden Haltebereiche 18 und den Kontaktbereich 17 ein. Durch die perforierten Haltebereiche 18 ist der Kontaktbereich 17 relativ zum Randbereich 19 quer zur Ebene des Kontaktträgers 3 mit geringen Kräften auslenkbar. Denn die Haltebereiche 18 sind durch die jeweilige Perforation 16 quer zur Positionserfassungsstrecke 7 signifikant geschwächt und erleichtern dadurch die lokalen elastischen Verformungen des Kontaktträgers 3 im Kontaktbereich 17. Erkennbar sind der Kontaktbereich 17 und der Randbereich 19 bei der bevorzugten Ausführungsform unperforiert. Mit anderen Worten, die jeweilige Perforation 16 erstreckt sich ausschließlich über die Haltebereiche 18.

Im Beispiel ist die jeweilige Perforation 16 durch eine Vielzahl von zueinander parallelen Schlitzen 20 gebildet. Diese Schlitze 20 können bspw. mittels eines Laserplotters in den Kontaktträger 3 geschnitten werden. Hierbei wird der Werkstoff des Kontaktträgers 3, bei dem es sich vorzugsweise um eine Kunststofffolie handelt, aufgeschmolzen und mittels Druckluft aus dem Folienverband ausgeblasen. Die Breite der Schlitze 20 entspricht bspw. der Dicke des Kontaktträgers 3. Das heißt, eine Schlitzbreite ist gleich groß wie eine Kontaktträgerdicke. Im Beispiel erstrecken sich die Schlitze 20 parallel zum Verlauf der Positionserfassungsstrecke 7. Diese ist im gezeigten Beispiel geradlinig konzipiert. Es ist jedoch klar, dass auch gerundete bzw. gekrümmte und insbesondere kreisförmige Positionserfassungsstrecken 7 möglich sind, bspw. zur Realisierung eines Winkelsensors. Die Schlitze 20 besitzen dann zweckmäßig einen entsprechend gekrümmten bzw. kreisbogenförmigen Verlauf.

Bei der hier gezeigten, besonders vorteilhaften Ausführungsform erstrecken sich die Schlitze 20 innerhalb mehrerer Schlitzreihen 21 hintereinander, wobei sich diese Schlitzreihen 21 innerhalb der jeweiligen Perforation 16 parallel zueinander erstrecken. Außerdem sind benachbarte Schlitzreihen 21 quer zur Längsrichtung der Schlitze 20, also quer zur Positionserfassungsstrecke 7 voneinander beabstandet. Erkennbar sind im Beispiel die Schlitze 20 benachbarter Schlitzreihen 21 in deren Längsrichtung zueinander versetzt angeordnet, wodurch sich eine Art Schlitz-Verband bildet. Der zuvor genannte Abstand benachbarter Schlitzreihen 21 ist dabei größer als die zuvor genannte Schlitzbreite der einzelnen Schlitze 20.

Anstelle einer mit Hilfe von Schlitzen 20 realisierten Perforation 16, sind grundsätzlich auch andere Perforationen denkbar. Beispielsweise kann eine Perforation 16 auch durch eine Vielzahl von kreisförmigen Öffnungen gebildet sein.

Der hier vorgestellte Positionssensor 1 ist mittels magnetischer Kräfte betätigbar. Zu diesem Zweck ist er mit einer Betätigungseinrichtung 22 ausgestattet. Diese ist an einer von der Positionserfassungsschaltung 5 abgewandten Seite des Kontaktträgers 3 angeordnet. Mit Hilfe dieser Betätigungseinrichtung 22 können berührungslos magnetische Kräfte zum Betätigen des Positionssensors 1 bzw. des Kontaktträgers 3 eingeleitet werden. Hierzu ist rein exemplarisch ein Magnetkrafterzeuger 23 dargestellt, um berührungslos magnetische Anziehungskräfte auf die Betätigungseinrichtung 22 einzuleiten. Der Magnetkrafterzeuger 23 ist im Beispiel als Permanentmagnet dargestellt. Es ist jedoch klar, dass hierzu auch ein Elektromagnet verwendet werden kann. Der Magnetkrafterzeuger 23 ist beabstandet zum Basisträger 22 an einer von der Betätigungseinrichtung 22 abgewandten Seite angeordnet. Im Beispiel der Fig. 1 bis 3 ist der Positionssensor 1 auf eine Tragstruktur 24 aufgebracht. Der Magnetkrafterzeuger 23 ist an einer vom Positionssensor 1 abgewandten Seite dieser Tragstruktur 24 beabstandet zur Tragstruktur 24 angeordnet. Er ist parallel zur Positionserfassungsstrecke 7 relativ zum Positionssensor 1 verstellbar, wodurch der Ort zur Krafteinleitung entlang der Positionserfassungsstrecke 7 verstellbar ist.

Die Positionserfassungseinrichtung 22 stützt sich über einen Steg 25 am Kontaktträger 3 ab. Dieser Steg 25 erstreckt sich dabei entlang des Kontaktbereichs 17, der zur elektrischen Kontaktierung der zwei Komponenten 4, 8 der Positionserfassungsschaltung 5 dient und hierzu lokal verformbar ist. Der Steg 25 besitzt quer zur Längsrichtung des Stegs 25 bzw. quer zur Positionserfassungsstrecke 7 eine nicht näher bezeichnete Stegbreite, die kleiner ist als eine nicht näher bezeichnete Breite der Betätigungseinrichtung 22 quer zur Positionserfassungsstrecke 7. Im Beispiel ist die Stegbreite maximal halb so groß wie die Betätigungseinrichtungsbreite. Zusätzlich oder alternativ ist die Stegbreite etwa gleich groß wie eine ebenfalls nicht eingezeichnete, quer zu Positionserfassungsstrecke 7 gemessene Breite des Kontaktbereichs 17. Insbesondere sind die Stegbreite und die Kontaktbereichsbreite gleich groß dimensioniert. Durch den Steg 25 können die an der Betätigungseinrichtung 22 über deren gesamte Breite angreifenden Betätigungskräfte 6 auf den vergleichsweise schmalen Steg 25 konzentriert werden, wodurch auch eine konzentrierte Krafteinleitung auf den Kontaktbereich 17 des Kontaktträgers 3 erfolgt.

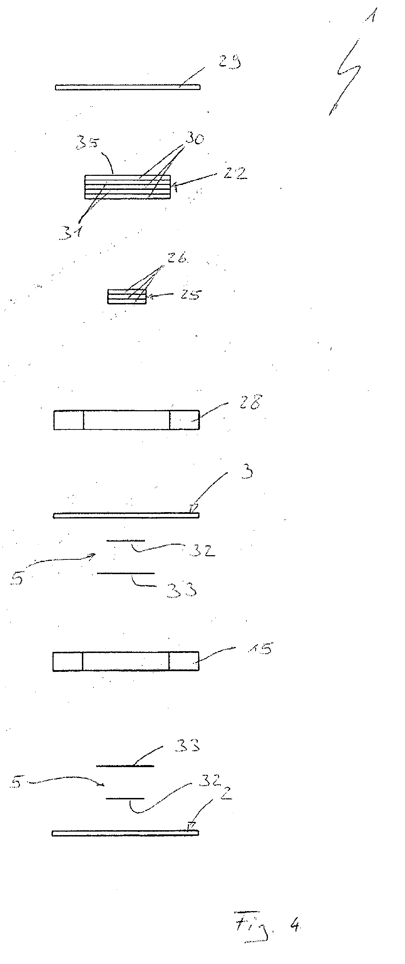

Der Steg 25 kann entsprechend den Darstellungen der Fig. 1 bis 3 und 5 einschichtig konzipiert sein. Alternativ kann der Steg 25 entsprechend der Darstellung gemäß Fig. 4 mehrschichtig, insbesondere dreischichtig konzipiert sein. In Fig. 4 sind rein exemplarisch drei Stegelemente 26 dargestellt, die zusammen den Steg 25 bilden. Besonders vorteilhaft ist dabei eine Ausführungsform, bei welcher die einzelnen Stegelemente 26 lose aufeinander aufliegen. Entsprechend Fig. 5 kann der Steg 25 vorteilhaft an seinen Längsenden jeweils eine Verbreiterung 27 aufweisen. Diese Verbreiterung 27 ist auf die Innenabmessungen eines weiteren, rahmenförmigen Distanzelements 28 so abgestimmt, dass der Steg 25 durch Formschluss weitgehend lagefixiert in diesem Distanzelement 28 angeordnet werden kann. Das Distanzelement 28 ist an einer vom Basisträger 2 abgewandten Seite am Kontaktträger 3 angebracht und schafft einen Raum 34 zur Unterbringung der Betätigungseinrichtung 22 sowie des Stegs 25. Dieser Raum 34 ist mit einem Abdeckelement 29 verschlossen, wodurch der Raum 34 insbesondere schmutzdicht und feuchtigkeitsdicht versiegelt sein kann.

Die Betätigungseinrichtung 22 weist bei der hier gezeigten bevorzugten Ausführungsform einen Stapel 35 aus mehreren Metallfolien 30 auf, die jeweils lokal elastisch verformbar und ferromagnetisch konzipiert sind. Anstelle eines solchen Stapels 35 aus mehreren Metallfolien 30 kann bei einer alternativen Ausführungsform die Betätigungseinrichtung 22 auch durch eine einzige ferromagnetische Metallfolie gebildet sein, die lokal elastisch verformbar ist. Ein Stapel 35 aus mindestens zwei derartigen Metallfolien 30 hat jedoch gegenüber einer einzigen Metallfolie den Vorteil, dass innerhalb des Stapels 35 die an den einzelnen Metallfolien 30 wirkenden Betätigungskräfte aufaddiert werden, während die zur Durchbiegung der einzelnen Metallfolien 30 erforderlichen Kräfte vergleichsweise gering sind. Um bei einer einzigen Metallfolie die gleiche Durchbiegung mit der gleichen Betätigungskraft realisieren zu können, muss die einzelne Metallfolie eine größere Dicke aufweisen, wodurch jedoch die zur Durchbiegung dieser Metallfolie erforderliche magnetische Anziehungskraft zunimmt.

Entsprechend einer vorteilhaften Ausführungsform kann innerhalb des Stapels 35 zwischen benachbarten Metallfolien 30 zumindest eine Kunststofffolie 31 angeordnet sein. Diese Kunststofffolien 31 verhindern ein unmittelbares Aneinanderhaften der Metallfolien 30 im Falle einer daran angreifenden Magnetkraft. Hierdurch bleibt der Stapel 35 elastisch verformbar. Ohne Beschränkung der Allgemeinheit bilden im Beispiel der Fig. 1 bis 3 fünf Metallfolien 30 und vier Kunststofffolien 31 den jeweiligen Stapel 35, während er im Beispiel der Fig. 4 drei Metallfolien 30 und zwei Kunststofffolien 31 umfasst.

Die Metallfolien 30 liegen im Stapel 35 der Betätigungseinrichtung 22 lose aufeinander bzw. lose auf den Kunststofffolien 31 auf. Hierdurch werden Relativbewegungen der einzelnen Schichten innerhalb des Stapels 35 der Betätigungseinrichtung 22 zueinander vereinfacht, was eine lokale Verformung für die Betätigung des Sensors 1 vereinfacht. In entsprechender Weise können auch die einzelnen Stegelemente 26 lose aufeinander aufliegen. Auch die Betätigungseinrichtung 22 kann lose auf dem Steg 25 aufliegen. Auch kann der Steg 25 lose auf dem Kontaktträger 3 aufliegen.

Die Kunststofffolien 31 im Stapel der Betätigungseinrichtung 22 können eine reibungsreduzierte Oberfläche aufweisen. Sie können bspw. aus PEEK oder aus Teflon hergestellt sein. Ferner können die Metallfolien 30 eine Ölschicht aufweisen. Sie können aus Stahl oder aus Eisen hergestellt sein.

Während der Kontaktträger 3 bevorzugt als Folie konzipiert ist, um die gewünschte Flexibilität zu erzielen, kann der Basisträger 2 entweder ebenfalls als Folie bzw. flexibel konzipiert sein oder eine vergleichsweise hohe Steifigkeit aufweisen. Beispielsweise kann der Basisträger 2 aus einem Leiterplattenmaterial bestehen, z. Bsp. aus FR4. Der Basisträger 2 besteht somit insbesondere aus einem Glasfasergewebe, das mit Epoxydharz gebunden ist. Grundsätzlich ist die Auswahl an Materialien für den Basisträger 2 vergleichsweise beliebig, solange das verwendete Material für magnetische Kräfte hinreichend durchdringbar ist, so lange der Positionssensor 1 mittels magnetischer Kräfte betätigt werden soll.

Zum Herstellen der Positionserfassungsschaltung 5 kann es bspw. entsprechend Fig. 4 vorgesehen sein, die Leiterbahnen 10 und die Anschlüsse 11 des Basisträgers 2 sowie die Leiterbahn 13, den Anschluss 14 und auch die Kollektorbahn 12 des Kontaktträgers 3 mittels einer Silberpolymerpaste im Siebdruck-Verfahren herzustellen. Dies ist in Fig. 4 durch eine Silberbeschichtung 32 angedeutet. Anschließend kann eine Karbon-Polymerpaste im Siebdruck-Verfahren aufgebracht werden, um zum einen die Widerstandsbahn 9 des Basisträgers 2 und zum anderen einen Oxydationsschutz der Silber-Komponenten zu realisieren. Eine entsprechende Karbonbeschichtung ist in Fig. 4 mit 33 bezeichnet.

## Patentansprüche

1. Positionssensor, insbesondere Weggeber oder Winkelgeber,
- mit einem Basisträger (2), der zumindest eine Komponente (4) einer Positionserfassungsschaltung (5) trägt,
- mit einem flexiblen Kontaktträger (3), der beabstandet zur wenigstens einen Komponenten (4) der Positionserfassungsschaltung (5) angeordnet ist und durch lokal angreifende Betätigungskräfte (6) lokal soweit elastisch verformbar ist, dass er eine lokale elektrische Kontaktierung von zwei Komponenten (4, 8) der Positionserfassungsschaltung (5) ermöglicht,
**dadurch gekennzeichnet,**
**dass** der Kontaktträger (3) zumindest eine lokal elastische Verformungen erleichternde Perforation (16) aufweist.

2. Positionssensor nach Anspruch 1,
**dadurch gekennzeichnet,**
**dass** der Kontaktträger (3) einen zur elektrischen Kontaktierung der zwei Komponenten (4, 8) der Positionserfassungsschaltung (5) lokal elastisch verformbaren Kontaktbereich (17), zwei beiderseits des Kontaktbereichs (17) angeordnete Haltebereiche (18) und einen den Kontaktbereich (17) und die Haltebereiche (18) einfassenden Randbereich (19) aufweist, wobei die beiden Haltebereiche (18) jeweils eine solche Perforation (16) aufweisen.

3. Positionssensor nach Anspruch 2,
**dadurch gekennzeichnet,**
**dass** der Kontaktbereich (17) unperforiert ist und/oder dass der Randbereich (19) unperforiert ist.

4. Positionssensor nach einem der Ansprüche 1 bis 3,
**dadurch gekennzeichnet,**
**dass** die jeweilige Perforation (16) eine Vielzahl von zueinander parallelen Schlitzen (20) aufweist.

5. Positionssensor nach Anspruch 4,
**dadurch gekennzeichnet,**
**dass** sich die Schlitze (20) parallel zum Verlauf einer Positionserfassungsstrecke (7) der Positionserfassungsschaltung (5) erstrecken.

6. Positionssensor nach Anspruch 4 oder 5,
**dadurch gekennzeichnet,**
**dass** sich die Schlitze (20) innerhalb mehrerer Schlitzreihen (21) hintereinander erstrecken, die sich parallel zueinander erstrecken und die quer zur Längsrichtung der Schlitze (20) voneinander beabstandet sind.

7. Positionssensor nach Anspruch 6,
**dadurch gekennzeichnet,**
**dass** die Schlitze (20) benachbarter Schlitzreihen (21) zueinander in deren Längsrichtung versetzt angeordnet sind.

8. Positionssensor nach Anspruch 6 oder 7,
**dadurch gekennzeichnet,**
**dass** ein Abstand benachbarter Schlitzreihen (21) größer ist als eine Breite der Schlitze (20).

9. Positionssensor nach einem der Ansprüche 1 bis 8,
**dadurch gekennzeichnet,**
**dass** an einer von der Positionserfassungsschaltung (5) abgewandten Seite des Kontaktträgers (3) eine mittels magnetischer Kräfte (6) anziehbare Betätigungseinrichtung (22) angeordnet ist.

10. Positionssensor nach Anspruch 9,
**dadurch gekennzeichnet,**
**dass** sich die Betätigungseinrichtung (22) über einen einschichtigen oder mehrschichtigen Steg (25) am Kontaktträger (3) abstützt, der sich entlang eines zur elektrischen Kontaktierung der zwei Komponenten (4, 8) der Positionserfassungsschaltung (5) lokal verformbaren Kontaktbereichs (17) des Kontaktträgers (3) erstreckt.

11. Positionssensor nach Anspruch 10,
**dadurch gekennzeichnet,**
**dass** eine quer zur Längsrichtung des Stegs (25) gemessene Stegbreite etwa gleich groß ist wie eine quer zur Längsrichtung des Kontaktbereichs (17) gemessene Kontaktbereichsbreite.

12. Positionssensor nach einem der Ansprüche 9 bis 11,
**dadurch gekennzeichnet,**
**dass** die Betätigungseinrichtung (22) eine einzige lokal elastisch verformbare ferromagnetische Metallfolie aufweist.

13. Positionssensor nach einem der Ansprüche 9 bis 11,
**dadurch gekennzeichnet,**
**dass** die Betätigungseinrichtung (22) einen Stapel (35) aus mehreren lokal elastisch verformbaren ferromagnetischen Metallfolien (30) aufweist.

14. Positionssensor nach Anspruch 13,
**dadurch gekennzeichnet,**
**dass** zwischen benachbarten Metallfolien (30) zumindest eine Kunststofffolie (31) angeordnet ist.

15. Positionssensor nach einem der Ansprüche 9 bis 14,
**dadurch gekennzeichnet,**
- **dass** der Steg (25) lose auf dem Kontaktträger (3) aufliegt, und/oder
- **dass** die Betätigungseinrichtung (22) lose auf dem Steg (25) aufliegt, und/oder
- **dass** die Metallfolien (30) lose aufeinander oder auf den Kunststofffolien (31) aufliegen.

## Claims

1. A position sensor, in particular a distance sensor or angle sensor,
- with a base support (2) that supports at least one component (4) of a position detection circuit (5),
- with a flexible contact support (3) that is arranged spaced apart from the at least one component (4) of the position detection circuit (5) and that can be elastically deformed by locally engaging actuation forces (6) to such an extent that it enables local electrical contacting of two components (4, 8) of the position detection circuit (5),
**characterized in**
**that** the contact support (3) has at least one perforation (16) that facilitates locally elastic deformations.

2. The position sensor according to claim 1,
**characterized in**
**that** the contact support (3) has a contact region (17) that is locally elastically deformable for contacting the two components (4, 8) of the position detection circuit (5), two holding regions (18) arranged on both sides of the contact region (17), and an edge region (19) enclosing the contact region (17) and the holding region (18), wherein each of the two holding regions (18) has such a perforation (16).

3. The position sensor according to claim 2,
**characterized in**
**that** the contact region (17) is unperforated and/or the edge region (19) is unperforated.

4. The position sensor according to any one of the claims 1 to 3,
**characterized in**
**that** the respective perforation (16) has a multiplicity of slots (20) that are parallel to one another.

5. The position sensor according to claim 4,
**characterized in**
**that** the slots (20) extend parallel to the course of a position detection path (7) of the position detection circuit (5).

6. The position sensor according to claim 4 or claim 5,
**characterized in**
**that** the slots (20) extend one behind the other within a plurality of slot rows (21) that extend parallel to one another and that are arranged spaced apart from one another transverse to the longitudinal direction of the slots (20).

7. The position sensor according to claim 6,
**characterized in**
**that** the slots (20) of adjacent slot rows (21) are arranged offset to one another in their longitudinal direction.

8. The position sensor according to claim 6 or claim 7,
**characterized in**
**that** a spacing between adjacent slot rows (21) is greater than a width of the slots (20).

9. The position sensor according to any one of the claims 1 to 8,
**characterized in**
**that** on that side of the contact support (3) that faces away from the position detection circuit (5), an actuation device (22) is arranged that can be attracted by means of magnetic forces (6).

10. The position sensor according to claim 9,
**characterized in**
**that** the actuation device (22) is supported on the contact support (3) via a single-layered or multilayered web (25) which extents along a contact region (17) of the contact support (3), which contact region is locally deformable for electrically contacting the two components (4, 8) of the position detection circuit (5).

11. The position sensor according to claim 10,
**characterized in**
**that** a web width measured transverse to the longitudinal direction of the web (25) is approximately equal to a contact region width measured transverse to the longitudinal direction of the contact region (17).

12. The position sensor according to any one of the claims 9 to 11,
**characterized in that** the actuation device (22) has a single ferromagnetic metal foil that is locally elastically deformable.

13. The position sensor according to any one of the claims 9 to 11,
**characterized in**
**that** the actuation device (22) has a stack (35) of a plurality of ferromagnetic metal foils (30) that are locally elastically deformable.

14. The position sensor according to claim 13,
**characterized in**
**that** at least one plastic foil (31) is arranged between adjacent metal foils (30).

15. The position sensor according to any one of the claims 9 to 14,
**characterized in**
- **that** the web (25) rests loosely on the contact support (3), and/or
- **that** the actuation device (22) rests loosely on the web (25), and/or
- **that** the metal foils (30) rest loosely on top of one another or on the plastic foils (31).

## Revendications

1. Capteur de position, notamment indicateur de parcours ou indicateur d'angle,
- comportant un support de base (2), qui supporte au moins un composant (4) d'un circuit de détection de position (5),
- comportant un support de contact flexible (3), qui est disposé en espacement par rapport à au moins un composant (4) du circuit de détection de position (5) et est déformable élastiquement par des forces d'actionnement (6) intervenant localement jusqu'au point où un contact électrique local de deux composants (4,8) du circuit de détection de position (5) soit possible,
**caractérisé en ce que**
le support de contact (3) présente au moins une perforation (16) facilitant une déformation élastique locale.

2. Capteur de position selon la revendication 1, **caractérisé en ce que** le support de contact (3) présente une zone de contact (17) déformable élastiquement localement à des fins de contact électrique des deux composants (4,8) du circuit de détection de position (5), deux zones de retenue (18) disposées des deux côtés de la zone de contact (17) et une zone de bord (19) enserrant la zone de contact (17) et les zones de retenue (18), dans lequel les deux zones de retenue (18) présentent respectivement une telle perforation (16).

3. Capteur de position selon la revendication 2, **caractérisé en ce que** la zone de contact (17) est non perforée et/ou la zone de bord (19) est non perforée.

4. Capteur de position selon une des revendications 1 à 3, **caractérisé en ce que** la perforation respective (16) présente une pluralité de fentes (20) parallèles les unes aux autres.

5. Capteur de position selon la revendication 4, **caractérisé en ce que** les fentes (20) s'étendent parallèlement au cours de la piste de détection de position (7) du circuit de détection de position (5).

6. Capteur de position selon les revendications 4 ou 5, **caractérisé en ce que** les fentes (20) s'étendent à l'intérieur de plusieurs rangées de fentes (21) les unes derrière les autres, qui s'étendent parallèlement les unes aux autres et qui sont espacées les unes des autres transversalement à la direction longitudinale de la fente (20).

7. Capteur de position selon la revendication 6, **caractérisé en ce que** les fentes (20) de rangées de fentes voisines (21) sont disposées en décalage les unes par rapport aux autres dans leur direction longitudinale.

8. Capteur de position selon les revendications 6 ou 7, **caractérisé en ce que** un espacement des rangées de fentes voisines (21) est plus grand qu'une largeur de la fente (20).

9. Capteur de position selon une des revendications 1 à 8, **caractérisé en ce que** sur un côté du support de contact (3) qui se détourne du circuit de détection de position (5), un dispositif d'actionnement (22) pouvant être attiré au moyen de forces magnétiques (6) est disposé.

10. Capteur de position selon la revendication 9, **caractérisé en ce que** le dispositif d'actionnement (22) s'appuie par l'intermédiaire d'un gradin (25) en une couche ou en plusieurs couches sur le support de contact (3), qui s'étend le long d'une zone de contact (17) du support de contact (3), déformable localement à des fins de contact électrique des deux composants (4,8) du circuit de détection de position (5).

11. Capteur de position selon la revendication 10, **caractérisé en ce que** une largeur de gradin mesurée transversalement à la direction longitudinale du gradin (25) est environ aussi grande qu'une largeur de zone de contact mesurée transversalement à la direction longitudinale de la zone de contact (17).

12. Capteur de position selon une des revendications 9 à 11, **caractérisé en ce que** le dispositif d'actionnement (22) présente une unique feuille de métal ferromagnétique déformable localement élastiquement.

13. Capteur de position selon une des revendications 9 à 11, **caractérisé en ce que** le dispositif d'actionnement (22) présente une pile (35) composée de plusieurs feuilles de métal (30) ferromagnétique déformables localement élastiquement.

14. Capteur de position selon la revendication 13, **caractérisé en ce que** entre des feuilles de métal voisines (30), au moins une feuille de plastique (31) est disposée.

15. Capteur de position selon une des revendications 9 à 14, **caractérisé en ce que**
- le gradin (25) vient reposer de manière lâche sur le support de contact (3), et/ou
- le dispositif d'actionnement (22) vient reposer de manière lâche sur le gradin (25), et/ou
- les feuilles de métal (30) viennent reposer de manière lâche les unes sur les autres ou sur les feuilles de plastique (31).
